# EUROPEAN PATENT APPLICATION

(11) **EP 4 564 087 A1**
(43) Date of publication of application: **04.06.2025**
(21) Application number: 24214101.8
(22) Date of filing: 20.11.2024
(51) Int. Cl.: G02F 1/21, G02F 1/35, G02B 5/30, G02B 27/28, H01S 3/108, G02F 1/39

(54) **PERIODICALLY ORIENTED CRYSTALS AS A BRIGHT SOURCE OF POLARIZATION-ENTANGLED PHOTONS**

(30) Priority: 30.11.2023 US 202363604664 P
(71) Applicant: Thorlabs, Inc., Newton, NJ 07860 (US)
(72) Inventor: Domingue, Scott, Newton, NJ, 07860 (US); Kirchner, Matthew, Newton, NJ, 0786 (US); Döring, Jonathan, Newton, NJ, 07860 (US); Küchenmeister, Jens, Newton, NJ, 07860 (US); Bayer, Florian, Newton, NJ, 07860 (US)
(74) Representative: Grättinger Möhring von Poschinger Patentanwälte Partnerschaft mbB

(57) **Abstract**

A stack of crystals as a bright source of polarization-entangled photons, including: a plurality of first birefringent phase-matched crystals having a first optical axis; and a corresponding plurality of second birefringent phase-matched crystals having a second optical axis; wherein the plurality of the first and second crystals are alternately stacked to form a periodic crystal structure, with the first optical axis being offset from the second optical axis by a desired angle.

## Description

### CROSS REFERENCE TO RELATED APPLICATIONS

This application claims the benefit of U.S. Provisional Patent Application No. 63/604,664 filed on November 30, 2023. The disclosure of U.S. Provisional Patent Application No. 63/604,664 is hereby incorporated by reference.

### TECHNICAL FIELD

The present disclosure generally relates to light sources, and more particularly to periodically oriented crystals as a bright source of polarization-entangled photons.

### BACKGROUND

All currently available sources for polarization entangled photon pairs suffer from spatial and/or temporal walkoff because photons with horizontal polarization behave differently from those with vertical polarization inside the birefringent crystals that are used for the generation of the pairs. Spatial walkoff means different emission angles for different polarizations and temporal walkoff describes different arrival time at the detector for different polarization. Both effects lead to non-optimal entanglement because the different polarizations become distinguishable. Usually, these effects grow in strength with increasing crystal length. On the other hand, the brightness of the pair source (number of generated pairs per time) suffers when using thin crystals. Thus, a tradeoff between brightness and entanglement purity exists. This can partly be avoided by using compensation elements (birefringent crystals) that counteract the walkoff effects. However, these elements introduce added complexity, cost, losses, and adjustment difficulty to the setup.

Orthogonally oriented crystal pairs have been utilized as ultrabright sources of polarization entangled photons since 1999 [1 - 2]. Nonlinear crystals are cut and polished to form identical crystal pairs, with an optic axis orientation to optimize for the spontaneous down conversion of entangled photon pairs for a particular pump wavelength. A pair of identical crystals are then oriented to each other such that their planes containing the optical axis and the pump beam are rotated by 90 degrees to each other, i.e., rotations about the surface normal of the crystal entrance faces, which balances walkoff and increases entanglement. Finally, the pair of crystals are optically contacted together. While the crystal pair can improve on the brightness and degree of entanglement over individual crystals, the design of such pairs requires a tradeoff in brightness and entanglement, since the means of improving one degrades the other. A key feature of the crystal pairs is the optical contacting between the two crystals, which is an intensive process and is not extendable to multiple thin crystals.

Therefore, there is a long-felt need for a technical solution that provides a bright source of high quality entangled photons, while minimizing the need for tradeoffs between brightness and entanglement purity.

### SUMMARY

An embodiment of the present disclosure provides a stack of crystals as a bright source of polarization-entangled photons, including: a plurality of first birefringent phase-matched crystals having a first optical axis; and a corresponding plurality of second birefringent phase-matched crystals having a second optical axis; wherein the plurality of the first and second crystals are alternately stacked to form a periodic crystal structure, with the first optical axis being offset from the second optical axis by a desired angle.

An embodiment of the present disclosure provides a system for producing a bright source of polarization-entangled photons, including: a laser configured to generated polarized laser light; a plurality of first birefringent phase-matched crystals having a first optical axis; and a corresponding plurality of second birefringent phase-matched crystals having a second optical axis; wherein the plurality of the first and second crystals are alternately stacked to form a periodic crystal structure, with the first optical axis being offset from the second optical axis by a desired angle; and the stack of crystals is configured to output polarization-entangled photons upon receiving the polarized laser light from the laser.

### BRIEF DESCRIPTION OF THE DRAWINGS

FIG. 1 illustrates an example of three pairs of periodically oriented crystals according to an embodiment.
FIG. 2 illustrates a system for producing a bright source of polarization-entangled photons according to an embodiment.

### DETAILED DESCRIPTION

The description of illustrative embodiments according to principles of the present disclosure is intended to be read in connection with the accompanying drawings, which are to be considered part of the entire written description. In the description of embodiments of the disclosure herein, any reference to direction or orientation is merely intended for convenience of description and is not intended in any way to limit the scope of the present disclosure. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the disclosure are illustrated by reference to the exemplified embodiments. Accordingly, the disclosure expressly should not be limited to such exemplary embodiments illustrating some possible nonlimiting combination of features that may exist alone or in other combinations of features; the scope of the disclosure being defined by the claims appended hereto.

This disclosure describes the best mode or modes of practicing the disclosure as presently contemplated. This description is not intended to be understood in a limiting sense, but provides an example presented solely for illustrative purposes by reference to the accompanying drawings to advise one of ordinary skill in the art of the advantages and construction of the certain embodiments. In the various views of the drawings, like reference characters designate like or similar parts.

It is important to note that the embodiments disclosed are only examples of the many advantageous uses of the innovative teachings herein. In general, statements made in the specification of the present application do not necessarily limit any of the various claimed disclosures. Moreover, some statements may apply to some inventive features but not to others. In general, unless otherwise indicated, singular elements may be in plural and vice versa with no loss of generality.

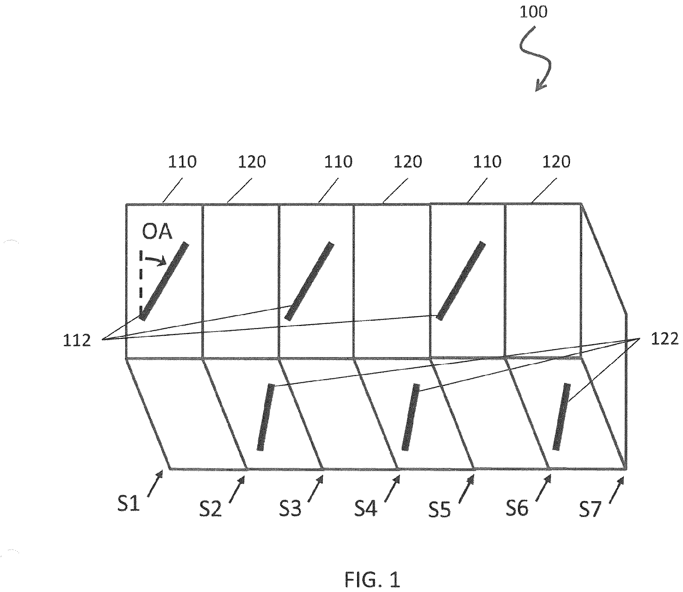

The present disclosure describes an approach to making stacks of compensated thin crystals, without the rigorous requirements of optical contacting. The periodically oriented crystal stack described in this patent offers an elegant solution to the problem above, as they combine the advantages of thin crystals (good entanglement) with those of thick crystals (high brightness). The stack of multiple crystal pairs relies on nearly index-matching, optically transparent epoxy to enable greater than 2 crystal configurations, without the spatial separation and interferometric stabilization required of a free space configuration [3]. The preferred embodiment starts with 2N (where N is an integer greater than one) freestanding, birefringent phase-matched crystals between 50 and 500 microns thick, then assembles the uncoated crystals with a 90-degree rotation of optical axes between each crystal, cemented by near index-matched optical epoxy. The assembled stack has an AR coating for the wavelengths of interest on the outside layers that interact with air. An example of such a periodically oriented crystal stack is shown in FIG. 1. In this example, the stacked crystal structure 100 includes 3 pairs of periodically oriented crystals. Crystals 110 have an optical axis (OA) 112, and crystals 120 have an optical axis 122, which is oriented at an angle relative to the optical axis 112, The crystals 110 and 120 are alternately stacked as shown (i.e. 110, 120, 110, 120, 110, 120). Outer surfaces S1 and S7 can be AR-coated for specific wavelengths according to one embodiment. Crystal interfaces S2, S3, S4, S5, and S6 are bonded with transparent index-matching epoxy according to one embodiment.

The entanglement quality increases with decreasing thickness of a single layer, while the brightness increases with the number of layers. For a large number of thin layers, both temporal and spatial walkoff are completely compensated inside the crystal, making additional compensation elements superfluous, thus avoiding the drawbacks described in the background section. This works because of the alternating polarization of the layers, the photons see the same average walkoff irrespective of their polarization. The emitted photon pairs are strongly entangled over the whole emission cone, vastly facilitating the adjustment process and improving the metrics of entanglement, such as the Bell test.

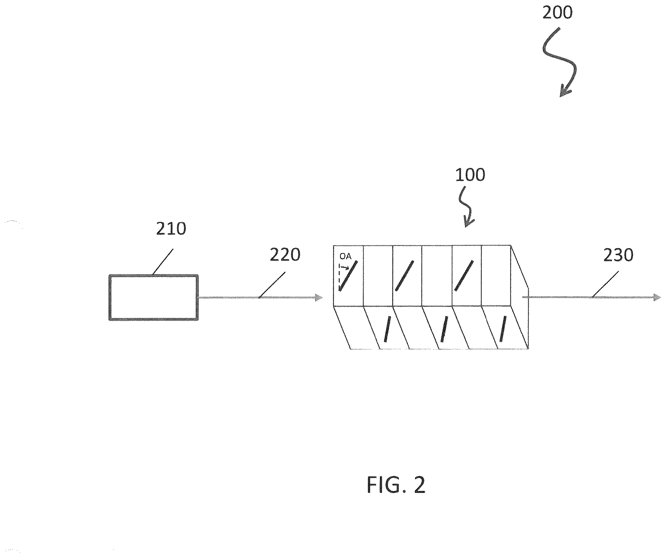

The stacked crystal structure 100 can be used in a system for producing a bright source of polarization-entangled photons according to an embodiment. An example system is shown in FIG. 2. The system 200 includes a laser source 210 configured to generate a polarized laser beam 220. The laser beam is directed to the stacked crystal structure 100, and the stacked crystal structure outputs polarization-entangled photons.

While the present disclosure describes at some length and with some particularity with respect to the several described embodiments, it is not intended that it should be limited to any such particulars or embodiments or any particular embodiment, but it is to be construed so as to provide the broadest possible interpretation in view of the related art and, therefore, to effectively encompass various embodiments herein. Furthermore, the foregoing describes various embodiments foreseen by the inventor for which an enabling description was available, notwithstanding that modifications of the disclosure, not presently foreseen, may nonetheless represent equivalents thereto.

### References:

[1]. Kwiat, Paul G., et al. "Ultrabright source of polarization-entangled photons," Physical Review A 60.2 (1999): R773.
[2]. Kwiat, Paul G., Phillippe H. Eberhard, and Andrew G. White. "Ultra-bright source of polarization-entangled photons," U.S. Patent No. 6,424,665. 23 Jul. 2002.
[3]. Hardy, Lucien. "Source of photons with correlated polarisations and correlated directions," Physics Letters A 161.4 (1992): 326-328.

## Claims

1. A stack of crystals as a bright source of polarization-entangled photons (100), comprising:
a plurality of first birefringent phase-matched crystals (110) having a first optical axis (112); and
a corresponding plurality of second birefringent phase-matched crystals (120) having a second optical axis (122);
wherein the plurality of the first and second crystals (110, 120) are alternately stacked to form a periodic crystal structure, with the first optical axis (112) being offset from the second optical axis (122) by a desired angle.

2. The stack of crystals according to claim 1, wherein the first and second crystals are cemented together by a near index-matched optical epoxy.

3. The stack of crystals according to claim 1, wherein the first and second crystals have a thickness of 50 - 500 µm.

4. The stack of crystals according to claim 1, wherein the first optical axis is offset from the second optical axis by 90 degrees.

5. The stack of crystals according to claim 1, wherein the periodic crystal structure comprises an AR coating for specific wavelengths on end surfaces of the stack that interact with air.

6. A system for producing a bright source of polarization-entangled photons (200), comprising:
a laser (210) configured to generated polarized laser light (220);
a plurality of first birefringent phase-matched crystals (110) having a first optical axis (112); and
a corresponding plurality of second birefringent phase-matched crystals (120) having a second optical axis (122);
wherein the plurality of the first and second crystals (110, 120) are alternately stacked to form a periodic crystal structure, with the first optical axis (112) being offset from the second optical axis (122) by a desired angle; and
the stack of crystals is configured to output polarization-entangled photons (230) upon receiving the polarized laser light (220) from the laser (210).

7. The system according to claim 6, wherein the first and second crystals are cemented together by a near index-matched optical epoxy.

8. The system to according to claim 6, wherein the first and second crystals have a thickness of 50 - 500 µm.

9. The system according to claim 6, wherein the first optical axis is offset from the second optical axis by 90 degrees.

10. The system according to claim 6, wherein the periodic crystal structure comprises an AR coating for specific wavelengths on end surfaces of the stack that interact with air.
